# EUROPÄISCHE PATENTSCHRIFT

(11) **EP 2 852 994 B1**
(45) Veröffentlichungstag und Bekanntmachung des Hinweises auf die Patenterteilung: **12.08.2020**
(21) Anmeldenummer: 13718192.1
(22) Anmeldetag: 24.04.2013
(51) Int. Cl.: H01M 4/04, H01M 4/131, H01M 4/136, H01M 4/1391, H01M 4/1397, H01M 4/38, H01M 4/485, H01M 4/58, H01M 4/62, C01G 23/00, H01M 4/02, H01M 10/052, H01M 10/0562

(54) **VERFAHREN ZUM HERSTELLEN EINER ELEKTRODE FÜR EINEN ELEKTROCHEMISCHEN ENERGIESPEICHER UND ELEKTRODE**
PROCESS FOR PRODUCING AN ELECTRODE FOR AN ELECTROCHEMICAL ENERGY STORAGE MEANS AND ELECTRODE
PROCÉDÉ DE FABRICATION D'UNE ÉLECTRODE POUR UN ACCUMULATEUR D'ÉNERGIE ÉLECTROCHIMIQUE ET ÉLECTRODE

(30) Priorität: 23.05.2012 DE 102012208608
(43) Veröffentlichungstag der Anmeldung: 01.04.2015
(73) Patentinhaber: Robert Bosch GmbH, 70442 Stuttgart (DE)
(72) Erfinder: KERKAMM, Ingo, 70565 Stuttgart-Rohr (DE); SORHAGE, Constanze, 70193 Stuttgart (DE); EISELE, Ulrich, 70199 Stuttgart (DE); SCHUMANN, Bernd, 71277 Rutesheim (DE); GRIMMINGER, Jens, 89250 Senden (DE); TENZER, Martin, 71701 Schwieberdingen (DE)
(86) Internationale Anmeldenummer: PCT/EP2013/058416
(87) Internationale Veröffentlichungsnummer: WO 2013/174592

(56) Entgegenhaltungen:
- EP-A1- 2 131 421
- WO-A1-2010/129875
- WO-A1-2011/145462
- US-A1- 2008 285 211
- US-B1- 6 475 673
- KEIICHI MINAMI ET AL: "Electrical and electrochemical properties of glass-ceramic electrolytes in the systems Li2S-P2S5-P2S3 and Li2S-P2S5-P2O5", SOLID STATE IONICS, Bd. 192, Nr. 1, 1. Juni 2011 (2011-06-01), Seiten 122-125, XP055066109, ISSN: 0167-2738, DOI: 10.1016/j.ssi.2010.06.018
- HIROKAZU KITAURA ET AL: "Electrochemical performance of all-solid-state lithium secondary batteries using Li4Ti5O12 electrode and Li2S-P2S5 solid electrolytes", JOURNAL OF MATERIALS RESEARCH, Bd. 25, Nr. 08, 1. August 2010 (2010-08-01), Seiten 1548-1553, XP055065974, ISSN: 0884-2914, DOI: 10.1557/JMR.2010.0199
- HIROKAZU KITAURA ET AL: "Fabrication of electrode-electrolyte interfaces in all-solid-state rechargeable lithium batteries by using a supercooled liquid state of the glassy electrolytes", JOURNAL OF MATERIALS CHEMISTRY, Bd. 21, Nr. 1, 1. Januar 2011 (2011-01-01) , Seite 118, XP055065980, ISSN: 0959-9428, DOI: 10.1039/c0jm01090a
- AVDEEV ET AL: "X-ray diffraction and Mossbauer spectroscopy studies of LiFe0.5Ti1.5O4 - A new primitive cubic ordered spinel", SOLID STATE SCIENCES, ELSEVIER, PARIS, FR, Bd. 9, Nr. 12, 1. Dezember 2007 (2007-12-01), Seiten 1135-1139, XP022379409, ISSN: 1293-2558
- S. SCHARNER ET AL: "Cation Distribution in Ordered Spinels of the Li2O-TiO2-Fe2O3System", JOURNAL OF SOLID STATE CHEMISTRY, vol. 134, no. 1, 1 November 1997 (1997-11-01), pages 170-181, XP055573044, US ISSN: 0022-4596, DOI: 10.1006/jssc.1997.7572
- JIAN GAO ET AL: "Preparation and characterization of spherical La-doped Li4Ti5O12 anode material for lithium ion batteries", IONICS, vol. 15, no. 5, 5 December 2008 (2008-12-05), pages 597-601, XP055573281, DE ISSN: 0947-7047, DOI: 10.1007/s11581-008-0306-0

## Beschreibung

Die vorliegende Erfindung betrifft ein Verfahren zum Herstellen einer Elektrode für einen elektrochemischen Energiespeicher und eine Elektrode für einen elektrochemischen Energiespeicher.

### Stand der Technik

Elektrochemische Energiespeicher, wie insbesondere Lithium-Ionen-Batterien, werden heutzutage in vielen Anwendungsgebieten, wie beispielsweise in der mobilen Kommunikation oder der Unterhaltungselektronik verwendet. Obgleich derartige Energiespeicher eine hohe Kapazität (bis zu 150Wh/kg) aufweisen, bieten diese noch Verbesserungspotenzial.

Lithium-Schwefel-Batterien, beispielsweise, können eine hohe Energiedichte von bis zu 600 Wh/kg aufweisen. Derartige Batterien basieren insbesondere auf der Gesamtreaktion 2 Li + S = Li₂S, durch welche eine Spannung von etwa 2,0 V bis 2,5 V gegenüber Li/Li⁺ bereitgestellt werden kann. Derzeit weisen Lithium-Schwefel-Batterien jedoch noch einige Beeinträchtigungen auf. So kann sich beispielsweise bei herkömmlichen Kathoden aus einer porösen Kohlenstoff-Schwefel-Mischung während des Betriebes deren Mikrostruktur verändern, was zu einer Unterbrechung der elektrischen Kontaktierung des Schwefels und damit zu einer Abnahme der Ladungskapazität und Ratenfähigkeit führen kann.

Aus der Druckschrift EP 2 339 674 A1 ist eine Lithium-Schwefel-Batterie bekannt. Eine derartige Lithium-Schwefel-Batterie weist eine Kathoden-Struktur auf, die eine durchgehende Lage an Nanoröhrchen oder Nanodrähten und ferner Schwefel-Partikel umfasst, wobei die Schwefel-Partikel an den Nanoröhrchen oder Nanodrähten befestigt sind, und wobei die durchgehende Lage eine Elektrolytlage kontaktiert.

Sowohl die WO 2010/129875 A1 als auch die WO 2011/145462 A1 offenbaren Verfahren zur Herstellung von Kathoden für Lithium-Ionen-Batterien aus einem Verbundmaterial aus Lithiumsulfid bzw. Schwefel und Lithiumtitanat.

### Offenbarung der Erfindung

Gegenstand der vorliegenden Erfindung ist ein Verfahren zum Herstellen einer Elektrode für einen elektrochemischen Energiespeicher, insbesondere für eine Lithium-Ionen-Batterie, wie in Anspruch 1 definiert.

Durch ein vorstehend beschriebenes Verfahren wird es möglich, auf einfache und kostengünstige Weise eine besonders definierte und reproduzierte Porosität in ein Lithiumtitanatgerüst beziehungsweise in eine Lithiumtitanatstruktur, insbesondere einer Elektrode für einen elektrochemischen Energiespeicher, einzubauen.

Ein Lithiumtitanatgerüst kann dabei insbesondere ein Gerüst beziehungsweise eine Matrix sein, welches auf der chemischen Formel Li₄Ti₅O₁₂ basiert und dessen Eigenschaften, wie etwa die elektrische und ionische Leitfähigkeit, gegebenenfalls durch den Zusatz von Dotierelementen, wie beispielsweise Magnesium (Mg), Aluminium (Al), Eisen (Fe) oder weiteren gezielt verbessert werden können. Durch eine Verwendung beziehungsweise Herstellung eines derartigen Gerüsts kann auf etwaige Binder und Leitzusätze in der Kathodenstruktur verzichtet werden, da die verwendete Lithiumtitanatstruktur elektrisch und ionisch leitfähig ist. Jedoch ist auch das Einfügen von Leitzusätzen, wie beispielsweise Graphen oder Kohlenstoffnanoröhrchen, nicht ausgeschlossen. Dabei kann die Lithiumtitanat-Struktur in direktem Kontakt mit dem Aktivmaterial stehen, wie insbesondere einer schwefelhaltigen Verbindung.

Ferner kann in der fertigen Zelle auf flüssige Stoffe, wie etwa Elektrolyte, vollständig verzichtet werden, so dass die Bildung von löslichen Lithium-Polysulfidphasen etwa unterdrückt beziehungsweise verhindert werden kann, was eine besonders langzeitstabile Kapazität erlauben kann.

In einem Verfahrensschritt a) kann zunächst eine Mischung von Ausgangsstoffen zur Ausbildung eines Lithiumtitanats bereitgestellt werden. Unter einer Mischung von Ausgangsstoffen kann dabei insbesondere ein Gemisch mit einer beliebigen Anzahl verschiedener Komponenten verstanden werden, aus welchem durch ein geeignetes Verfahren Lithiumtitanat herstellbar ist. Beispielsweise kann Lithiumtitanat, insbesondere ein Lithiumtitanat-Pulver, hergestellt werden aus einer Mischung von insbesondere analysenreinen Lithiumverbindungen und Titanverbindungen.

Die so erhaltene Mischung von Ausgangsstoffen zur Ausbildung eines Lithiumtitanats kann in einem weiteren Verfahrensschritt b) kalziniert werden. Ein Kalzinieren kann dabei im Sinne der vorliegenden Erfindung insbesondere bedeuten eine Behandlung unter gesteigerter Temperatur. Beispielsweise können Temperaturen von 800 °C oder sogar darüber verwendet werden. Die Reaktionsmischung kann beispielsweise in oxidierender Atmosphäre (Luft) oder in reduzierender Atmosphäre (beispielsweise einer Mischung aus Wasserstoff und Argon) oder in einer inerten Atmosphäre (beispielsweise Argon) kalziniert werden. Durch die gezielte Beeinflussung der Sauerstoffleerstellenkonzentration sowie der Valenzzustände der Dotierelemente im Titanat kann sich dabei ein Kalzinieren unter reduzierender Atmosphäre besonders vorteilhaft auf die elektrische und ionische Leitfähigkeit auswirken.

Insbesondere kann dabei das Kalzinieren unter einer wasserstoffhaltigen Atmosphäre erfolgen. Zum Beispiel kann das Kalzinieren in einer reduzierenden Atmosphäre mit einem Wasserstoffanteil von ≥ 5 Vol.-% bis ≤ 20 Vol.-%, bezogen auf das Gesamtvolumen der Gase der reduzierenden Atmosphäre, erfolgen. Beispielsweise kann das Kalzinieren unter einer Edelgas-Wasserstoff-Atmosphäre, beispielsweise einer Argon-Wasserstoff-Atmosphäre erfolgen. Hierdurch kann eine besonders vorteilhafte elektrische Leitfähigkeit erzielt werden.

Ferner kann das Kalzinieren erfolgen bei einer Temperatur in einem Bereich von ≥ 700 °C bis ≤ 900 °C, zum Beispiel bei etwa 800 °C. Alternativ oder zusätzlich kann das Kalzinieren beispielsweise über einen Zeitraum innerhalb eines Bereiches von ≥ 6 h bis ≤ 14 h, zum Beispiel bei etwa 10 h lang, erfolgen. Die Mischung von Ausgangsstoffen kann dabei ferner, insbesondere vor dem Kalzinieren, beispielsweise mittels einer Kugelmühle, zum Beispiel einer Planetenkugelmühle, gemahlen und/oder gegebenenfalls extrudiert werden.

Um eine definierte reproduzierbare Porosität in die zu erzeugende Struktur einzubringen, kann in einem weiteren Verfahrensschritt c) vor und/oder nach dem Kalzinieren eine Schwefel und gegebenenfalls Lithium umfassende Komponente zu der Mischung von Ausgangsstoffen zur Ausbildung eines Lithiumtitanats hinzugefügt werden. Dabei ist dem Fachmann verständlich, dass die Schwefel und gegebenenfalls Lithium umfassende Komponente zu jedem geeigneten Zeitpunkt zu der Mischung von Ausgangsstoffen zur Ausbildung eines Lithiumtitanats hinzugefügt werden kann. Beispielsweise kann die Schwefel und gegebenenfalls Lithium umfassende Komponente zusammen mit einer Lithiumverbindung und einer Titanverbindung die Ausgangsmischung bereits vor dem Kalzinieren bilden. Alternativ kann die Schwefel und gegebenenfalls Lithium umfassende Komponente der Mischung nach dem Kalzinieren zugegeben werden.

Durch Hinzufügen einer Schwefel und gegebenenfalls Lithium umfassenden Komponente zu der Reaktionsmischung vor dem Sintern kann eine die Schwefel und gegebenenfalls Lithium umfassende Komponente in einer Kathodenstruktur, welche insbesondere ionisch leitend und elektrisch leitend sein kann, Kavitäten beziehungsweise Poren ausbilden, welche besonders definiert und reproduzierbar sein können. Dabei sind die Porengrößen, Porengeometrien und die Anzahl der Poren beziehungsweis die Porendurchdringung der erzeugten Struktur unmittelbar durch eine Variation der Schwefel und gegebenenfalls Lithium-umfassenden Komponente, insbesondere mit Bezug auf Anzahl, Größe und Form, anpassbar. Dadurch ist eine besonders leichte Adaptierbarkeit der zu erzeugenden Struktur an das gewünschte Anwendungsgebiet möglich. Beispielsweise kann der Grad an offenen Poren beziehungsweise an geschlossenen Poren durch den Anteil der Schwefel und gegebenenfalls Lithium umfassenden Komponente in der Mischung gesteuert werden, wobei durch einen hohen Anteil ein hoher Anteil an offenen Poren entstehen kann.

Darüber hinaus kann das Herstellen einer derartigen Struktur umfassend ein Aktivmaterial in einem Herstellungsschritt erfolgen. Auf ein späteres Einfügen einer insbesondere als Aktivmaterial dienenden schwefel- und gegebenenfalls lithiumhaltigen Verbindung kann somit verzichtet werden.

In dieser Ausgestaltung kann somit Schwefel beziehungsweise eine schwefelhaltige Verbindung, insbesondere als Aktivmaterial in eine stabile und steife Struktur eingebaut werden, welche unmittelbar als Kathode beispielsweise in Lithium-Schwefel-Batterien einsetzbar ist. Ein Vorteil in dieser Ausgestaltung bietet sich insbesondere dadurch, dass die erzeugten Poren nicht zwingend offen sein müssen, um den Schwefel zu einem späteren Zeitpunkt in die Struktur einzufügen. Vielmehr können die Poren, welche insbesondere durch das schwefel- und gegebenenfalls lithiumhaltige Material gebildet werden können, auch geschlossene Poren ausbilden. Dadurch kann die Herstellung vereinfacht werden, da bezüglich der Porosität geringere Anforderungen möglich sind. Darüber hinaus kann ein Vorliegen von geschlossenen Poren um eine schwefelumfassende und gegebenenfalls Lithium umfassende Phase herum vorteilhaft sein, da dadurch ein Diffundieren einer insbesondere mobilen Lithium-Schwefel-Phase aus der Kathode hinaus in den Bereich eines elektrochemischen Energiespeichers während eines Lade- beziehungsweise Entladezyklus verhindert werden kann. Dadurch kann insbesondere eine langzeitstabile und hohe Kapazität bereitgestellt werden. Darüber hinaus muss kein überstöchiometrischer Schwefelanteil beziehungsweise Gehalt an Aktivmaterial bereitgestellt werden, da der vorhandene Schwefel im Wesentlichen vollständig an einer elektrochemischen Reaktion teilnehmen kann. Darüber hinaus ist der Herstellungsprozess einer Elektrode dadurch, dass Schwefel beziehungsweise eine schwefelhaltigen Komponente als Aktivmaterial unmittelbar in das Gerüst eingebaut werden kann, besonders kostengünstig.

Alternativ oder zusätzlich kann, um eine definierte und reproduzierbare Porosität in einer Lithiumtitanatstruktur zu erhalten, gemäß Verfahrensschritt d) vor und/oder nach dem Kalzinieren ein Porenbildner zu der Mischung von Ausgangsstoffen zur Ausbildung eines Lithiumtitanats hinzugefügt werden.

Ein Porenbildner kann dabei im Sinne der vorliegenden Erfindung insbesondere eine Substanz sein, welche während des Herstellungsprozesses in das Gerüst beziehungsweise in die Matrix eingebaut werden kann, jedoch zu einem späteren Zeitpunkt entfernt werden kann, so dass Kavitäten beziehungsweise Poren zurückbleiben können.

Ein Vorteil einer derartigen Ausgestaltung kann darin gesehen werden, dass die Poren in der erzeugten Lithiumtitanatstruktur besonders definiert und reproduzierbar sein können. Darüber hinaus kann ein Verfahren in dieser Ausgestaltung besonders einfach und kostengünstig sein, da die Poren im Wesentlichen im Verlauf des normalen Herstellungsprozesses erzeugbar sein können. Ferner sind die Porengrößen, Porengeometrien und die Anzahl der Poren beziehungsweise die Porendurchdringung der erzeugten Struktur unmittelbar durch eine Variation des Porenbildners, insbesondere mit Bezug auf Anzahl, Größe und Form, anpassbar. Dadurch ist eine besonders leichte Adaptierbarkeit der zu erzeugenden Struktur an das gewünschte Anwendungsgebiet möglich.

Der Porenbildner kann dabei nur ein Material beziehungsweise nur eine Substanz umfassen, oder auch eine Mischung aus Substanzen umfassen. Die Verwendung von zwei oder mehr Porenbildnern kann dabei zu einem besonders homogenen Temperaturprofil und damit zu niedrigeren Temperaturen während etwa eines Ausbrennens führen. Durch den Porenbildner können dabei insbesondere hierarchische und untereinander verbundene Porenstrukturen erzeugt werden, um so ein besonders vorteilhaftes Lade- und/oder Entladeverhalten einer Elektrode beziehungsweise einer mit einer derartigen Elektrode ausgestatteten Energiespeicher ermöglichen.

In einem weiteren Verfahrensschritt e) kann das kalzinierte Produkt gesintert werden. Dabei kann das Sintern etwa unter Luftatmosphäre oder unter Edelgasatmosphäre erfolgen. Beispielsweise kann das Sintern unter einer Argonatmosphäre (100 % Argon), erfolgen. Das Sintern kann beispielsweise bei einer Temperatur in einem Bereich von ≥ 850 °C bis ≤ 950 °C, zum Beispiel bei etwa 950 °C, erfolgen. Durch das Sintern, welches dem weiteren Wachsen und Zusammenschmelzen der im Kalzinierschritt erzeugten Titanatkristallite dienen kann, kann die erzeugte Struktur eine besonders hohe Festigkeit und Struktur erhalten.

Für den Fall, dass ein Porenbildner zu der Mischung von Ausgangsstoffen zur Ausbildung eines Lithiumtitanats hinzugefügt worden ist, kann in einem weiteren Schritt, etwa vor oder nach dem Sintern, der Porenbildner aus dem kalzinierten und gegebenenfalls gesinterten Produkt entfernt werden. Dies kann beispielsweise erreicht werden durch Ausbrennen des Porenbildners. Geeignete Bedingungen umfassen beispielhaft Temperaturen in einem Bereich von kleiner gleich 1550°C beispielsweise entsprechend einer Sintertemperatur für das Lithiumtitanat, wobei Zeiträume von größer oder gleich 4 Stunden bis kleiner oder gleich 40 Stunden geeignet sein können. Dadurch können an den Stellen, welche der Porenbildner in der Struktur eingenommen hat, Poren beziehungsweise Kavitäten ausgebildet werden, welche geeignet sind um Aktivmaterial aufzunehmen. Dieser Schritt kann beispielsweise in Einheit mit einem Sintern erfolgen.

Ferner kann, um besonders stabile Strukturen zu ermöglichen, der Porenbildner vor dem Sintern und damit vor dem Ausbilden der keramischen Phase entfernt werden, um zu verhindern, dass der Porenbildner im Inneren der Struktur gefangenbleibt.

Beispielsweise kann der Porenbildner in einer Konzentration von kleiner oder gleich 15 Gew.-% vorliegen. Beispiele für Porenbildner umfassen etwa thermoplastische Polymere, wie beispielsweise Polybutylen, Polymethylpenten, Polyethylen, Polypropylen, Polystyrol, Polyamide, Acrylnitril-Butadien-Polystyrol (ABS), acrylische Polyester (PET), Polyurethane, Polymethylmetacrylat (PMMA) oder ähnliche.

Entsprechend kann in einem weiteren Verfahrensschritt, beispielsweise durch Einschmelzen von reinem Schwefel oberhalb seines Schmelzpunktes von ~112°C, Aktivmaterial in die Poren eingefügt werden für den Fall, dass kein Aktivmaterial der Ausgangsmischung zugesetzt wird. Durch Anlegen eines Unterdrucks beziehungsweise mehrmaliges Wiederholen des Schmelzvorgang kann eine maximale Porenfüllung mit Schwefel erreicht werden.

Ein weiterer Vorteil der Verwendung eines Porenbildners kann darin gesehen werden, dass auch Aktivmaterialien verwendet werden können, welche gegebenenfalls bei den bei einem Kalzinieren und/oder Sintern herrschenden Bedingungen nicht stabil sind. Dadurch ist eine besonders freie Wahl des Aktivmaterials möglich.

Durch das vorbeschriebene Verfahren kann eine Lithiumtitanat-Struktur, insbesondere basierend auf der allgemeinen Formel Li₄Ti₅O₁₂ mit, entweder offenen und/oder geschlossenen Poren erzeugt werden, wobei die Porosität ausgebildet werden kann in Abhängigkeit der verwendeten Prozessbedingungen und Ausgangsstoffe. Beispielsweise kann die Art der Poren, also ob insbesondere offene oder geschlossene Poren auftreten, abhängig sein von den verwendeten Ausgangsmaterialien, also etwa einem Verhältnis von dem Lithiumtitanat oder den hierfür eingesetzten Ausgangssubstanzen und der eingefügten schwefel- und gegebenenfalls lithiumhaltigen Substanz beziehungsweise Porenbildner. Eine derartige Struktur kann beispielsweise Verwendung finden als Kathode in einer Lithium-Schwefel-Batterie, mit einem gewünschten Separator (wie etwa einem Polymer-Separator oder einem keramischen Separator) und einer geeigneten Anode (wie etwa umfassend Graphit, Lithium).

Im Rahmen einer Ausgestaltung kann das Verfahren den weiteren Verfahrensschritt umfassen:
g) Chemisches und/oder elektrochemisches Insertieren von Lithium in das kalzinierte und gegebenenfalls gesinterte Produkt.

Durch eine Insertion von (zusätzlichem) Lithium in ein Lithiumtitanat, welches auch als ein Lithiumtitanoxid bezeichnet werden kann, kann vorteilhafterweise die Lithiumionenleitfähigkeit des Lithiumtitanats erhöht werden. Zudem kann durch eine Lithiuminsertion auch die elektrische Leitfähigkeit des Lithiumtitanats deutlich gesteigert werden.

Lithiuminsertiertes Lithiumtitanat eignet sich daher vorteilhafterweise als Mischleiter für Lithium-Zellen, beispielsweise Lithium-Schwefel-Zellen und/oder Lithium-Ionen-Zellen.

Durch den Einsatz eines Mischleiters beziehungsweise einer Träger- und/oder Leitstruktur aus lithiuminsertiertem Lithiumtitanat in einer Kathode einer Lithium-Schwefel-Zelle kann vorteilhafterweise eine stabile Kathodenstruktur bereitgestellt werden, welche nicht den Beeinträchtigungen unterliegt, welche bei herkömmlichen Kohlenstoff-Schwefel-Mischung-Kathoden aufgrund von Strukturveränderungen während des Betriebes auftreten können.

Für den Einsatz von Lithiumtitanaten als Trägerstruktur und/oder Leitstruktur oder als lithiumionenleitende Schicht in Lithium-Zellen, insbesondere in Lithium-Zellen-Kathoden, ist eine möglichst hohe Lithiumionenleitfähigkeit sowie, insbesondere insofern das Lithiumtitanat als elektrischer Leiter dient, eine möglichst hohe elektrische Leitfähigkeit wünschenswert. Diese kann durch eine Lithiuminsertion signifikant gesteigert werden.

Durch eine Insertion von Lithium in Li₄Ti₅O₁₂, insbesondere unter Ausbildung von Li₄₊ₓTi₅O₁₂ mit 0 < x ≤ 3, kann vorteilhafterweise die Lithiumionenleitfähigkeit und die elektrische Leitfähigkeit deutlich erhöht werden.

Dabei kann das Insertieren von Lithium chemisch durch Tauchen des kalzinierten und gegebenenfalls gesinterten Produktes in eine lithiumhaltige Flüssigkeit erfolgen. Zum Beispiel kann hierfür eine Butyllithiumlösung, beispielsweise von Butyllithium in n-Hexan, eingesetzt werden. In der lithiumhaltigen Flüssigkeit kann das kalzinierte und gegebenenfalls gesinterte Produkt für einen langen Zeitraum, beispielsweise von einigen Tagen oder einer oder mehreren Wochen verweilen. Während dieser Verweilzeit können Lithiumionen aus der lithiumhaltigen Flüssigkeit in das kalzinierte und gegebenenfalls gesinterte Produkt eindringen und in dessen chemische Struktur insertieren beziehungsweise interkalieren. Auf diese Weise kann bewirkt werden, dass das Lithiumtitanat, beispielsweise Li₄₊ₓTi₅O₁₂, einen höheren Lithiumanteil als herkömmliches Lithiumtitanat (Li₄Ti₅O₁₂) aufweist.

Alternativ kann eine Lithiuminsertion elektrochemisch erfolgen. Insbesondere kann dazu das kalzinierte und gegebenenfalls gesinterte Produkt als Kathode in einer galvanischen Beladungszelle verbaut werden.

Z Erfindungsgemäß enthält die Mischung von Ausgangsstoffen zur Ausbildung eines Lithiumtitanats wenigstens einen eisenhaltigen Ausgangsstoff zur Ausbildung eines eisendotierten Lithiumtitanats. Beispielsweise kann die Ausgangsmischung dabei Eisen(lll)oxid umfassen. Durch eine Eisendotierung des Lithiumtitanats kann vorteilhafterweise das elektrochemische Potential des Lithiumtitanats auf über 2,0 V, insbesondere auf ∼2,3 V, angehoben werden. Dadurch, dass das elektrochemische Potential des eisendotierten Lithiumtitanats höher eingestellt wird als das elektrochemische Potential der Basisreaktion einer Lithium-Schwefel-Batterie (∼ 2,0 V) kann vorteilhafterweise durch die Eisendotierung in das Lithiumtitanat (zusätzlich) insertiertes Lithium stabilisiert und eine Selbstentladung in Gegenwart von Schwefel vermieden werden.

Dabei kann in dieser Ausführungsform verhindert werden, dass, wie beispielsweis oftmals bei bekannten porösen Kohlenstoff-Schwefel-Kompositen, eine zyklische Deposition und Entlösung von Li₂S stattfindet, welches zu einer Verschlechterung beziehungsweise einem Brechen der Kathodenstruktur beziehungsweise zu einem Brechen der elektronischen Kontakte zwischen Kohlenstoffpartikeln führen kann. Durch ein erfindungsgemäßes Verhindern oder zumindest deutliches Einschränken dieser Effekte kann eine Leistungssteigerung des Energiespeichers hervorgerufen und die Zellkapazität erhöht werden.

Beispielsweise kann auch ein Lithiumtitanat basierend auf der allgemeinen chemischen Formel Li₄Ti₅O₁₂ und entsprechend der allgemeinen chemischen Formel: Li_{4+x-y}Fe_{3y}Ti_{5-2y}O₁₂ hergestellt werden, wobei 0 < y ≤ 1, insbesondere 0,2 ≤ y ≤ 1, und 0 ≤ x ≤ 3.

Im Rahmen einer weiteren Ausgestaltung kann die Schwefel und gegebenenfalls Lithium umfassende Komponente Lithiumsulfid (Li₂S) und/oder Lithiumsulfat (Li₂SO₄) umfassen. Auch in dieser Ausgestaltung kann somit ermöglicht werden, dass sowohl eine schwefelhaltige Verbindungen als auch eine lithiumhaltige Verbindung zusammen in eine Elektrodenstruktur eingebaut werden. Somit kann Lithium bereits in eine Elektrodenstruktur eingebaut werden, was weitere Arbeitsschritte einsparen kann. Insbesondere bei der Verwendung von Lithiumsulfid kann vorteilhaft sein, dass diese Verbindung einen Schmelzpunkt von 1372°C aufweist. Dadurch kann diese auch bei einem Sintervorgang, der meist in einem Temperaturbereich von 1000°C oder weniger ablaufen kann, als Feststoff verbleiben, was die Stabilität der Struktur und ferner das Herstellungsverfahren vereinfachen kann. Die Verwendung von Lithiumsulfat kann insbesondere aus Kostengründen vorteilhaft sein, wobei Lithiumsulfat während des Sintervorgangs unter reduzierender Atmosphäre zu Lithiumsulfid reduziert werden kann. Dadurch kann auf kostengünstige Weise das gleiche Produkt wie bei der unmittelbaren Verwendung von Lithiumsulfid hergestellt werden.

Darüber hinaus kann, wenn die schwefelhaltige Verbindung vor dem Sintern oder vor dem Kalzinieren in die Mischung gegeben wird, ein Herstellungsverfahren erfolgen, ohne besondere Schritte bereitstellen zu müssen, also unter Standardbedingungen.

Im Rahmen einer weiteren Ausgestaltung kann die Schwefel und gegebenenfalls Lithium umfassende Komponente in Form von Partikeln einer Größe von kleiner oder gleich 20 nm vorliegen. Dadurch können Poren in dem Lithiumtitanatgerüst beziehungsweise in dem Elektrodengerüst entstehen, welche ebenfalls einen derartig geringen Durchmesser aufweisen, da die Porengröße im Wesentlichen durch die Größe der Schwefel und gegebenenfalls Lithium umfassenden Partikeln vorgegeben werden kann. Bei derartig kleinen Poren beziehungsweise bei derartig geringen Partikeln, kann besonders vorteilhaft ermöglicht werden, dass das gesamte schwefelhaltige Material bei einem Lade- und/oder Entladevorgang eines elektrochemischen Energiespeichers verwendet wird. Dadurch kann eine besonders langzeitstabile Kapazität erreicht werden. Darüber hinaus kann die eingesetzte Schwefelmenge und gegebenenfalls Lithiummenge reduziert werden, was Kosten sparen kann.

Im Rahmen einer weiteren Ausgestaltung kann die Mischung von Ausgangsstoffen zur Ausbildung eines Lithiumtitanats Lithiumcarbonat (Li₂CO₃) und/oder Titanoxid (TiO₂) umfassen. Durch derartige Ausgangsstoffe kann in besonders einfacher Weise Lithiumtitanat erzeugt werden.

Im Rahmen einer weiteren Ausgestaltung kann der Porenbildner Stärke und/oder Graphit umfassen. Derartige Stoffe können auf leichte Weise aus dem Gerüst entfernt werden, so dass durch die Verwendung der vorgenannten Stoffe besonders definierte Poren möglich sind, darüber hinaus reagieren derartige Stoffe auch bei hohen Temperaturen nicht mit der Lithiumtitanat-Struktur, so dass keine Beeinträchtigungen der Struktur während des Herstellungsprozesses auftreten.

Im Rahmen einer weiteren Ausgestaltung kann der Porenbildner durch Ausbrennen aus dem kalzinierten und gegebenenfalls gesinterten Produkt entfernt werden. Dies ist ein besonders einfaches Verfahren, um den Porenbildner aus der Struktur zu entfernen. Darüber hinaus kann in dieser Ausgestaltung der Porenbildner bei einem ohnehin ablaufenden Reaktionsschritt, nämlich dem Sintern, erfolgen, so dass das Verfahren in dieser Ausgestaltung besonders einfach und kostengünstig durchführbar sein kann. Ferner kann in dieser Ausgestaltung ein besonders vollständiges Entfernen des Porenbildners erfolgen, so dass die Poren besonders definiert ausbildbar sein können. Bei der Verwendung von Stärke und/oder Graphit als Porenbildner, beispielsweise, können diese durch eine thermische Behandlung zu Kohlenmonoxid oder Kohlendioxid reagieren und so als gasförmige Stoffe aus dem Gefüge entfernt werden. Folglich kann, was insbesondere aus Kostengründen vorteilhaft sein kann, in einem Schritt mit dem Sintern realisiert werden. In dieser Ausgestaltung kann der Porenbildner beispielsweise nach dem Kalzinieren zugegeben werden. Beim Sintern kann dann gegebenenfalls eine langsame beziehungsweise an die Gasentwicklung angepasste Temperatursteigung vorteilhaft sein, um ein zu schnelles Ausbrennen des Porenbildners zu verhindern. Wenn der Porenbildner beispielsweise bei 250°C verbrennt beziehungsweise ausbrennt, kann bei dieser Temperatur eine Haltezeit realisiert und dann erst die Temperatur auf die Sintertemperatur weiter gesteigert werden, um das entstehende Gas langsam entweichen zu lassen.

Hinsichtlich weiterer Merkmale und Vorteile des erfindungsgemäßen Verfahrens wird hiermit explizit auf die Erläuterungen im Zusammenhang mit der erfindungsgemäßen Elektrode, der erfindungsgemäßen Lithium-Ionen-Batterie, den Figuren sowie der Figurenbeschreibung verwiesen.

Gegenstand der vorliegenden Erfindung ist ferner eine Elektrode für eine Verwendung in einer Lithium-Ionen-Batterie, insbesondere in einer Lithium-Schwefel-Batterie, wie in Anspruch 10 definiert.

Dadurch, dass in der Elektrodenstruktur beziehungsweise in der Lithiumtitanat-Matrix geschlossene Poren angeordnet sind, in denen eine schwefelhaltige und gegebenenfalls lithiumhaltige Verbindung angeordnet ist, kann das Aktivmaterial besonders langzeitstabil in der Struktur lokalisiert bleiben. Dadurch kann eine besonders langzeitstabile Kapazität erreicht werden, wodurch auch bei gering eingesetzten Schwefelmengen gute Ergebnisse erzielbar sind.

Im Rahmen einer Ausgestaltung kann die Matrix Poren in einer Größe in einem Bereich von kleiner oder gleich 20nm aufweisen. Dadurch kann erreicht werden, dass das in den Poren angeordnete Aktivmaterial im Wesentlichen vollständig in Kontakt mit der leitfähigen Struktur gelangen kann. Ferner ist die Ausnutzung des Schwefels bei einer Schichtdicke von 10nm Schwefel auf der Titanatoberfläche besonders hoch/vorteilhaft, da die Reaktion zu Li₂S nahezu vollständig ablaufen kann. Bei höheren Schichtdicken kann es durch die isolierenden Eigenschaften des Schwefels beziehungsweise Schwefelsulfids dazu kommen, dass der Spannungsabfall über die Schwefel- beziehungsweise Schwefelsulfidschicht zu groß wird und Aktivmaterial ohne direkten Kontakt zum Titanat beziehungsweise getrennt durch eine 10nm dicke Li₂S Schicht nicht mehr an der Reaktion teilnehmen kann und somit die Gesamtkapazität reduziert. Dadurch kann in dieser Ausgestaltung mit einer geringen Menge an Aktivmaterial bereits eine gute Kapazität erzielbar sein.

Hinsichtlich weiterer Merkmale und Vorteile der erfindungsgemäßen Elektrode wird hiermit explizit auf die Erläuterungen im Zusammenhang mit dem erfindungsgemäßen Verfahren, der erfindungsgemäßen Lithium-Ionen-Batterie, den Figuren sowie der Figurenbeschreibung verwiesen.

Gegenstand der vorliegenden Erfindung ist ferner eine Lithium-Ionen-Batterie, insbesondere eine Lithium-Schwefel-Batterie, umfassend eine wie vorstehend beschrieben ausgebildete Elektrode.

Bei einer derartigen Lithium-Ionen-Batterie kann eine besonders langzeitstabile Kapazität erreicht werden, wodurch auch bei gering eingesetzten Schwefelmengen beziehungsweise Aktivmaterialmenge gute Kapazitäten erzielbar sind.

Hinsichtlich weiterer Merkmale und Vorteile der erfindungsgemäßen Lithium-Ionen-Batterie Elektrode wird hiermit explizit auf die Erläuterungen im Zusammenhang mit dem erfindungsgemäßen Verfahren, der erfindungsgemäßen Elektrode, den Figuren sowie der Figurenbeschreibung verwiesen.

### Zeichnungen und Beispiele

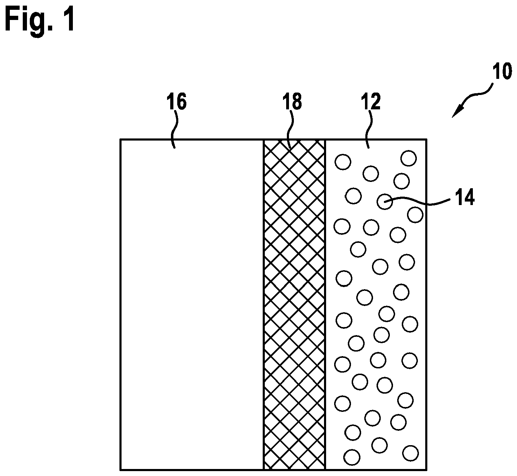

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt
- Fig. 1: eine schematische Darstellung einer Ausführungsform eines erfindungsgemäßen Energiespeichers.

In der Figur 1 ist eine schematische Darstellung einer Ausführungsform einer Lithium-Ionen-Batterie 10 gemäß der Erfindung gezeigt. Insbesondere kann ein derartiger Energiespeicher Anwendung finden in Fahrzeugen, beispielsweise ein Hybrid-, Plug-in-Hybrid- oder Elektrofahrzeugen, einer Energiespeicheranlage, beispielsweise zur stationären Energiespeicherung, zum Beispiel in einem Haus oder einer technischen Anlagen, in Elektrowerkzeugen, Elektrogartengeräten oder elektronischen Geräten, zum Beispiel Notebooks, PDAs oder Mobiltelefonen.

Eine derartige Lithium-Ionen-Batterie 10 umfasst eine nach einem erfindungsgemäßen Verfahren hergestellte Elektrode 12, die Poren 14 in einer Matrix aus Lithiumtitanat aufweist. Dabei können die Poren 14 offen und/oder geschlossen sein. Weiterhin umfasst die Lithium-Ionen-Batterie 10 eine Anode 16, wie etwa eine Lithium-Anode oder eine Anode 16 aus einem Material, das reversibel Lithiumionen interkalieren kann, und ferner einen zwischen Anode und Kathode angeordneten Elektrolyten 18. Der Elektrolyt 18 kann dabei beispielsweise ein Festkörperelektrolyt sein, wie beispielsweise dotierter Granat basierend auf der chemischen Formel Li₇La₃Zr₂O₁₂ oder ein Festkörper-Glaskeramikelektrolyt wie Li₂S-P₂S₂-P₂O₅.

Eine derartige Elektrodenstruktur, wie in Figur 1 gezeigt, kann beispielsweise erzeugt werden aus einem Lithiumtitanat-Pulver. Letzteres kann beispielsweise gebildet werden aus einer Mischung aus analysenreinem Lithiumcarbonat (Li₂CO₃, 99%, etwa erwerblich von der Firma Alfa Aesar) und Titanoxid (TiO₂, Rutil-Struktur, erhältlich von der Firma Tronox). Die Ausgangssubstanzen können zu einer Ausgangsmischung vereint werden, um eine geeignete stöchiometrische Zusammensetzung zu erhalten. Dabei kann beispielsweise ein Überschuss an Lithiumcarbonat von 3 Gew.-% eingesetzt werden, um einem Lithiumverlust bei folgenden Reaktionsschritten, wie etwa einer Hitzebehandlung oder einem Behandeln in einer Planeten-Kugelmühle, entgegenzuwirken. Die Reaktionsmischung kann dann in oxidierender Atmosphäre (Luft) oder in reduzierender Atmosphäre (beispielsweise einer Mischung aus Wasserstoff und Argon) oder in einer inerten Atmosphäre (beispielsweise Argon), etwa für 800°C für einen Zeitraum von 10 Stunden kalziniert werden. Im Weiteren kann das kalzinierte Pulver, etwa durch extrudieren, in die Form von Pellets geformt werden und in oxidierender Atmosphäre (Luft) oder in reduzierender Atmosphäre (beispielsweise einer Mischung aus Wasserstoff und Argon) oder in einer inerten Atmosphäre (beispielsweise Argon), etwa für 950°C für einen Zeitraum von 10 Stunden gesintert werden. Derartig hergestellte Proben resultieren in im Wesentlichen reinen Spinell (Li₄Ti₅O₁₂).

Weiterhin kann in ein derartiges Lithiumtitanat (Li₄Ti₅O₁₂) weiteres Lithium insertiert werden. Zur chemischen Insertion von Lithium in und damit der Herstellung von Li₄₊ₓTi₅O₁₂ mit 0 < x ≤ 3, werden gesinterte Li₄Ti₅O₁₂-Pellets in eine Lösung getaucht, welche eine geeignete Menge an Butyllithium enthielt. Die butyllithiumhaltige Lösung wurden durch Mischen von 15 Gew.-%-iger Butyllithium-Lösung in n-Hexan von der Firma Merck und 10 ml n-Hexan der Firma Merck hergestellt. In der butyllithiumhaltigen Lösung wurden die Pellets sieben Tage lang gerührt.

Ein Beispiel für eine elektrochemische Insertion von Lithium in Li_{4-y}Fe_{3y}Ti_{5-2y}O₁₂ und damit eine Herstellung von Li_{4+x-y}Fe_{3y}Ti_{5-2y}O₁₂ kann wie folgt ablaufen. Zur elektrochemischen Insertion von Lithium in Li_{4-y}Fe_{3y}Ti_{5-2y}O₁₂ und damit zur Herstellung von Li_{4-y+x}Fe_{3y}Ti_{5-2y}O₁₂ mit 0 < x ≤ 3, wurde eine Testzellen zusammengestellt, welche eine Lithiummetallanode, eine Li_{4-y}Fe_{3y}Ti_{5-2y}O₁₂ umfassende Zusammensetzung als Kathode, 350 µl einer 1,0 M Lösung aus LiPF₆ in Ethylencarbonat(EC)/Dimethylcarbonat(DMC) (1:1- Mischung, bezogen auf das Volumen) als Flüssigelektrolyten und einen unter dem Handelsnamen Whatman vertriebenen Glasmikrofaserseparator enthielten. Die Kathodenzusammensetzung umfasste 84 Gew.-% Li_{4-y+x}Fe_{3y}Ti_{5-2y}O₁₂-Pulver, 8 Gew.-% Ruß und 8 Gew.-% Polyvinylidenfluorid (PVdF) und wurde mittels Foilengießens auf einen Stromkollektor aus Aluminium aufgebracht.

Weiterhin kann es beispielhaft möglich sein, ein eisendotiertes Lithiumtitanat, wie etwa Li_{4-y}Fe_{3y}Ti_{5-2y}O₁₂ herzustellen. Li_{4-y}Fe_{3y}Ti_{5-2y}O₁₂ mit y = 0,345 - 0,75, beispielsweis kann durch eine herkömmliche Keramik-Festkörperreaktion hergestellt werden. Als Ausgangsverbindungen wurden dabei Lithiumcarbonat (Li₂CO₃, Reinheitsgrad 99,0 %, von Alfa Aesar), Titandioxid (TiO₂, Rutil, von Tronox) und Eisenoxid (Fe₂O₃, von Merck) eingesetzt. Die Ausgangsverbindungen wurden eingewogen, wobei ein Überschuss von 3 % Li₂CO₃ eingesetzt wurde, um einen Lithiumverlust während des Kalzinierens zu kompensieren. Anschließend wurden die Ausgangsverbindungen mittels einer Planetenkugelmühle gemahlen. Die resultierende Pulvermischung wurde unter Luftatmosphäre 10 Stunden lang bei 800 °C kalziniert. Auf diese Weise hergestellte Proben enthielten das gewünschte einphasige Produkt.

Weiterhin kann es beispielhaft möglich sein, bei der Herstellung von eisendotiertem Lithiumtitanat, wie etwa Li_{4-y}Fe_{3y}Ti_{5-2y}O₁₂, oder undotiertem Titanat nach dem Kalzinieren eine schwefel- und lithiumhaltige Komponente, wie Li₂S oder Li₂SO₄ mit hinzuzufügen. Li_{4-y}Fe_{3y}Ti_{5-2y}O₁₂ mit y = 0,345 - 0,75, beispielsweise kann durch eine herkömmliche Keramik-Festkörperreaktio n hergestellt werden. Als Ausgangsverbindungen wurden Lithiumcarbonat (Li₂CO₃, Reinheitsgrad 99,0 %, von Alfa Aesar), Titandioxid (TiO₂, Rutil, von Tronox) und Eisenoxid (Fe₂O₃, von Merck) verwendet. Die Ausgangsverbindungen wurden eingewogen, wobei ein Überschuss von 3 % Li₂CO₃ eingesetzt wurde, um einen Lithiumverlust während des Kalzinierens zu kompensieren. Anschließend wurden die Ausgangsverbindungen mittels einer Planetenkugelmühle gemahlen. Die resultierende Pulvermischung wurde unter Luftatmosphäre 10 Stunden lang bei 800 °C kalziniert. Anschließend wurde dem kalzinierten Titanat zwischen 20 und 80Gew% Li₂S (Alfa Aesar) zugesetzt. Anschließend wurden die Ausgangsverbindungen mittels einer Planetenkugelmühle erneut gemahlen und in reduzierender Atmosphäre (beispielsweise einer Mischung aus Wasserstoff und Argon) oder in einer inerten Atmosphäre (beispielsweise Argon), etwa für 950°C für einen Zeitraum von 10 Stunden gesintert. Derartig hergestellte Proben resultieren im Wesentlichen aus der gewünschten Mischung aus (ggf. Fe dotiertem) Titanat (Li₄Ti₅O₁₂) sowie Lithiumsulfid (Li₂S).

## Patentansprüche

1. Verfahren zum Herstellen einer Elektrode (12) für einen elektrochemischen Energiespeicher, insbesondere für eine Lithium-Ionen-Batterie (10),
umfassend die Verfahrensschritte:
a) Bereitstellen einer Mischung von Ausgangsstoffen zur Ausbildung eines eisendotierten Lithiumtitanats;
b) Kalzinieren der Mischung von Ausgangsstoffen zur Ausbildung des eisendotierten Lithiumtitanats;
c) Hinzufügen einer Schwefel und Lithium umfassenden Komponente in Form von Lithiumsulfid zu der Mischung von Ausgangsstoffen zur Ausbildung des eisendotierten Lithiumtitanats vor und/oder nach dem Kalzinieren, und
d) Gegebenenfalls Hinzufügen eines Porenbildners zu der Mischung von Ausgangsstoffen zur Ausbildung des eisendotierten Lithiumtitanats vor und/oder nach dem Kalzinieren;
e) Sintern des kalzinierten Produkts; und
f) Gegebenenfalls Entfernen des Porenbildners aus dem kalzinierten und gegebenenfalls gesinterten Produkt.

2. Verfahren nach Anspruch 1, wobei das Verfahren den weiteren Verfahrensschritt umfasst:
g) Chemisches und/oder elektrochemisches Insertieren von Lithium in das kalzinierte und gegebenenfalls gesinterte Produkt.

3. Verfahren nach Anspruch 1 oder 2, wobei die Mischung von Ausgangsstoffen zur Ausbildung des eisendotierten Lithiumtitanats wenigstens einen eisenhaltigen Ausgangsstoff umfasst zur Ausbildung des eisendotierten Lithiumtitanats.

4. Verfahren nach Anspruch 3, wobei ein eisendotiertes Lithiumtitanat entsprechend der allgemeinen chemischen Formel:
Li_{4+x-y}Fe_{3y}Ti_{5-2y}O₁₂
hergestellt wird, wobei 0 < y s 1, insbesondere 0,2 ≤ y ≤ 1, und 0 ≤ x ≤ 3.

5. Verfahren nach einem der Ansprüche 1 bis 4, wobei die Schwefel und Lithium umfassende Komponente zusätzlich Lithiumsulfat umfasst.

6. Verfahren nach einem der Ansprüche 1 bis 5, wobei die Schwefel und Lithium umfassende Komponente in Form von Partikeln einer Größe von kleiner oder gleich 20 nm vorliegt.

7. Verfahren nach einem der Ansprüche 1 bis 6, wobei Mischung von Ausgangsstoffen zur Ausbildung des eisendotierten Lithiumtitanats Lithiumcarbonat und/oder Titanoxid umfasst.

8. Verfahren nach einem der Ansprüche 1 bis 7, wobei der Porenbildner Stärke und/oder Graphit umfasst.

9. Verfahren nach einem der Ansprüche 1 bis 8, wobei der Porenbildner durch Ausbrennen aus dem kalzinierten und gegebenenfalls gesinterten Produkt entfernt wird.

10. Elektrode für eine Verwendung in einer Lithium-Ionen-Batterie (10), insbesondere in einer Lithium-Schwefel-Batterie, umfassend eine Matrix aus einem eisendotierten Lithium-Titanat, insbesondere der allgemeinen Formel
Li_{4+x-y}Fe_{3y}Ti_{5-2y}O₁₂,
wobei 0 < y ≤ 1, insbesondere 0,2 ≤ y s 1, und 0 ≤ x ≤ 3,
wobei die Matrix geschlossene Poren (14) aufweist, in denen zumindest eine schwefelhaltige und lithiumhaltige Komponente angeordnet ist.

11. Elektrode nach Anspruch 10, wobei die Matrix Poren (14) in einer Größe in einem Bereich von kleiner oder gleich 20nm aufweist.

12. Lithium-Ionen-Batterie, insbesondere Lithium-Schwefel-Batterie, umfassend eine Elektrode (12) nach einem der Ansprüche 10 oder 11.

## Claims

1. Process for producing an electrode (12) for an electrochemical energy store, in particular for a lithium ion battery (10),
comprising the process steps:
a) provision of a mixture of starting materials for forming an iron-doped lithium titanate;
b) calcination of the mixture of starting materials for forming the iron-doped lithium titanate;
c) addition of a sulfur- and lithium-comprising component in the form of lithium sulfide to the mixture of starting materials for forming the iron-doped lithium titanate before and/or after calcination, and
d) optionally addition of a pore former to the mixture of starting materials for forming the iron-doped lithium titanate before and/or after calcination;
e) sintering of the calcined product; and
f) optionally removal of the pore former from the calcined and optionally sintered product.

2. Process according to Claim 1, wherein the process comprises the further process step:
g) chemical and/or electrochemical insertion of lithium into the calcined and optionally sintered product.

3. Process according to Claim 1 or 2, wherein the mixture of starting materials for forming the iron-doped lithium titanate comprises at least one iron-containing starting material for forming the iron-doped lithium titanate.

4. Process according to Claim 3, wherein an iron-doped lithium titanate corresponding to the general chemical formula:
Li_{4+x-y}Fe_{3y}Ti_{5-2y}O₁₂,
where 0 < y ≤ 1, in particular 0.2 ≤ y ≤ 1, and 0 ≤ x ≤ 3,
is produced.

5. Process according to any of Claims 1 to 4, wherein the sulfur- and lithium-comprising component additionally comprises lithium sulfate.

6. Process according to any of Claims 1 to 5, wherein the sulfur- and lithium-comprising component is present in the form of particles having a size of less than or equal to 20 nm.

7. Process according to any of Claims 1 to 6, wherein the mixture of starting materials for forming the iron-doped lithium titanate comprises lithium carbonate and/or titanium oxide.

8. Process according to any of Claims 1 to 7, wherein the pore former comprises starch and/or graphite.

9. Process according to any of Claims 1 to 8, wherein the pore former is removed from the calcined and optionally sintered product by burning-out.

10. Electrode for use in a lithium ion battery (10), in particular a lithium-sulfur battery, comprising a matrix composed of an iron-doped lithium titanate, in particular of the general formula
Li_{4+x-y}Fe_{3y}Ti_{5-2y}O₁₂,
where 0 < y ≤ 1, in particular 0.2 ≤ y ≤ 1, and 0 ≤ x ≤ 3,
wherein the matrix has closed pores (14) in which at least one sulfur-containing and lithium-containing component is arranged.

11. Electrode according to Claim 10, wherein the matrix has pores (14) having a size in a range from less than or equal to 20 nm.

12. Lithium ion battery, in particular lithium-sulfur battery, comprising an electrode (12) according to either Claim 10 or 11.

## Revendications

1. Procédé de fabrication d'une électrode (12) pour un accumulateur d'énergie électrochimique, en particulier pour une batterie lithium-ion (10), comprenant les étapes de procédé consistant à :
a) fournir un mélange de matières premières pour réaliser un titanate de lithium dopé au fer ;
b) calciner le mélange de matières premières pour réaliser le titanate de lithium dopé au fer ;
c) ajouter un composant comprenant du soufre et du lithium sous forme de sulfure de lithium au mélange de matières premières pour réaliser le titanate de lithium dopé au fer avant et/ou après la calcination, et
d) le cas échéant, ajouter un agent porogène au mélange de matières premières pour réaliser le titanate de lithium dopé au fer avant et/ou après la calcination ;
e) fritter le produit calciné ; et
f) le cas échéant, éliminer l'agent porogène du produit calciné et éventuellement fritté.

2. Procédé selon la revendication 1, dans lequel le procédé comprend l'étape de procédé supplémentaire consistant à :
g) insérer de manière chimique et/ou électrochimique du lithium dans le produit calciné et éventuellement fritté.

3. Procédé selon la revendication 1 ou 2, dans lequel le mélange de matières premières pour réaliser le titanate de lithium dopé au fer comprend au moins une matière première contenant du fer pour réaliser le titanate de lithium dopé au fer.

4. Procédé selon la revendication 3, dans lequel un titanate de lithium dopé au fer est fabriqué selon la formule chimique générale suivante :
Li_{4+x-y}Fe_{3y}Ti_{5-2y}O₁₂
où 0 < y ≤ 1, en particulier 0,2 ≤ y ≤ 1, et 0 ≤ x ≤ 3.

5. Procédé selon l'une quelconque des revendications 1 à 4, dans lequel le composant comprenant du soufre et du lithium comprend en outre du sulfate de lithium.

6. Procédé selon l'une quelconque des revendications 1 à 5, dans lequel le composant comprenant du soufre et du lithium est présent sous forme de particules d'une dimension inférieure ou égale à 20 nm.

7. Procédé selon l'une quelconque des revendications 1 à 6, dans lequel le mélange de matières premières pour réaliser le titanate de lithium dopé au fer comprend du carbonate de lithium et/ou de l'oxyde de titane.

8. Procédé selon l'une quelconque des revendications 1 à 7, dans lequel l'agent porogène comprend de l'amidon et/ou du graphite.

9. Procédé selon l'une quelconque des revendications 1 à 8, dans lequel l'agent porogène est éliminé par flambage à l'intérieur du produit calciné et éventuellement fritté.

10. Electrode destinée à une utilisation dans une batterie lithium-ion (10), en particulier dans une batterie lithium-soufre, comprenant une matrice composée d'un titanate de lithium dopé au fer, en particulier selon la formule générale
Li_{4+x-y}Fe_{3y}Ti_{5-2y}O₁₂
où 0 < y ≤ 1, en particulier 0,2 ≤ y ≤ 1, et 0 ≤ x ≤ 3,
la matrice présentant des pores fermés (14) dans lesquels est disposé au moins un composant contenant du soufre et du lithium.

11. Electrode selon la revendication 10, dans laquelle la matrice présente des pores (14) d'une dimension comprise dans une plage inférieure ou égale à 20 nm.

12. Batterie lithium-ion, en particulier batterie lithium-soufre, comprenant une électrode (12) selon l'une quelconque des revendications 10 ou 11.
